Europäisches Patentamt

European Patent Office

Office européen des brevets

(19)

(11) Publication number: **0 271 924 B1**

# EUROPEAN PATENT SPECIFICATION

(12)

(45) Date of publication of patent specification: **04.09.91**  (51) Int. Cl.5: **C25D 17/12**

(21) Application number: **87118846.2**

(22) Date of filing: **18.12.87**

(54) Permanent anode for high current density galvanizing processes.

(30) Priority: **19.12.86 IT 2277686**

(43) Date of publication of application:
**22.06.88 Bulletin 88/25**

(45) Publication of the grant of the patent:
**04.09.91 Bulletin 91/36**

(84) Designated Contracting States:
**AT BE DE ES FR GB NL SE**

(56) References cited:
**US-A- 2 275 194**
**US-A- 3 703 458**

(73) Proprietor: **DE NORA PERMELEC S.P.A.**
**Via Bistolfi 35**
**I-20 134 Milano(IT)**

(72) Inventor: **Traini, Carlo**
**Via Pisani Dossi, 31**
**I-20100 Milan(IT)**
Inventor: **Schira, Renato**
**Via V. Giordano Orsini, 5**
**I-20100 Milan(IT)**
Inventor: **Leone, Tomaso**
**Viale Rimenbranze di Lambrate**
**I-20100 Milan(IT)**

(74) Representative: **Kinzebach, Werner, Dr. et al**
**Patentanwälte Reitstötter, Kinzebach und**
**Partner Sternwartstrasse 4 Postfach 86 06 49**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an anode for electrolytic cells utilized for galvanizing processes, especially for high-speed electro galvanizing.

By "high-speed electrogalvanizing" it is intended the method for obtaining metal strips coated by metals and/or oxides thereof by means of galvanizing processes. Said coating serves as protection from corrosion and/or decoration of the metal strip or as preparation for further treatments. Devices for coating of metals strips are known in the field. They are essentially constituted by a galvanic cell provided with one or more anodes opposed to a cathode constituted by the metal strip itself which slides at high speed (even 5 m/s) parallel to the anode. The device comprises also means for supporting and moving the strip and for circulating the electrolyte inside the cell.

As it is well-known, when the anodes and the cathode strips are connected to the respective poles of a power supply source, the metal cations contained in the electrolyte or galvanic bath, wherein the electrodes are immersed, deposit onto the strip, forming a coating. The thickness of the coating depends on various factors, such as current density, anode length and consequently the length of the cathode strip immersed into the galvanic bath, the speed of movement of the strip and so on. The electrolyte is subjected to forced circulation in order to allow for adequate feeding of cations to the cathode and avoid formation of large pockets of gas at the anode. The current density of said anodes is rather high, in the range of 10-15 kA/m2. Prior art devices for high-speed galvanizing processes usually utilize lead or lead alloy anodes. However, the use of lead anodes involves several disadvantages, mainly due to the fact that such anodes do not resist to the electrolyte attack and are readily consumed. In particular:

a) the anodes are to be frequently replaced, with the consequent high costs.

b) mud formation is experienced due to anode corrosion;

c) the electrolyte is polluted by lead particles in suspension and lead cations. The latter are cathodically codeposited while the first may be entrapped in the coating formed onto the strip, whose quality results thus undesirably lowered;

d) the interelectrodic gap varies with time causing an increased energy consumption;

e) the anodes unevenly wear out whereby a local variation of the interelectrodic gap occurs, the thickness of the coating onto the cathode strip is consequently uneven and the product quality results unacceptably spoiled.

Prior art equipments require therefore frequent shut-downs in order to remove the anodes which are subjected to expensive machining and subsequent re-assembly. A further disadvantage is represented by the weight of lead anodes and thus the need for adequate supporting means which results in complex and cumbersome geometries of the structure.

In order to overcome the disadvantages connected to the use of lead anodes, the dimensionally stable anodes have been proposed which are constituted by a substrate made of a metal resistant to the electrolyte or otherwise protected by a suitable intermediate coating, and an external electrocatalytic coating which substantially reduces the overvoltage with the consequent saving of energy consumption. Said anodes are usually constituted by solid sheets or expanded sheets, screens, rods or the like. The anodes of this type are anyway much lighter than the corresponding lead anodes. As it is well-known, the active lifetime of the external electrocatalytic coating decreases as the current density is increased. Under high current densities, as required for high-speed electrogalvanizing, the electrocatalytic coating exhibits a too short lifetime which considerably reduces the industrial interest.

Another problem connected with high-speed electrogalvanizing is the extremely fast sliding of the strip which is therefore subjected to vibrations and thus, even when their entity is negligible, contact between the cathode strip and the anodes may occur, giving rise to short-circuits.

It is an object of the present invention to overcome the disadvantages of the prior art by providing for a permanent anode, that is a substantially non-consumable anode, having a suitable structure for operating under the high current densities required in high-speed galvanizing processes, and offering at the same time a lifetime considerably higher than conventional dimensionally stable anodes.

It is a further object of the present invention to provide for an anode comprising a suitable device for preventing short-circuits.

The dimensionally stable anode for high speed galvanizing processes according to the present invention comprises at least two electrodic layers substantially parallel and in electrical contact with each other, each layer being constituted by an electroconductive substrate resistant to the electrolyte, and coated by an electrocatalytic coating for oxygen evolution comprising metals and/or oxides of platinum group metals and is characterized in that the geometry of the electrodic layer and/or the substrate material and/or the catalyst for the electrocatalytic coating of each layer are selected such that the current density of each single layer is substantially the same for all of the layers and does not exceed the value corresponding to the minimum desired lifetime of the anode, the number of the electrodic layers being such as to provide for a total current density in the range as required for high speed galvanizing, and a short-circuit preventing device positioned on the surface of the anode facing the cathode, said device comprising a housing (14) made of an insulating material and rotating means (12) made of a material resistant to mechanical stresses.

A permanent anode is thus obtained which can operate at a relatively low current density for each electrodic layer (in the case of two layers said current density will be half the process current density, while for more than two layers it will be proportionally reduced), has a lifetime of industrial interest although operating under high process current density as required in high-speed galvanizing.

The anode of the present invention is not consumable and therefore is not adversely affected by the inconveniences of prior art consumable anodes. Furthermore it is rather light with respect to conventional anodes, avoiding thus the need for sturdy supporting means.

The same current density may be obtained for all of the electrodic layers by suitably acting on the following parameters :

a) geometry of the electrodic layer;

b) material constituting the layer substrate and

c) the type of catalyst coating the layer substrate.

Assuming, for simplicity sake, that all the electrodic layers are made of the same material and coated by the same catalyst, only the geometry is considered.

The difference between the anode according to the present invention versus anodes made of several identical electrodic layers (for example an electrodic package made of three identical expanded sheets) is to be pointed out. In the case of identical layers at the start-up most electrical current is discharged by the first layer closer to the cathode and as soon as it wears out the second layer begins to operate, and so on until the most distant layer is completely spoiled. That is, all of the layers work in subsequent stages, one after the other, each of them at a current density quite close to the process current density. The total lifetime of the anode package will result from the sum of each single layer lifetime at the process current.

Conversely, the anode of the present invention, wherein all of the layers operate concurrently, substantially at the same current density, allows for proportionally reducing the current density according to the number of layers. The anode lifetime is thus higher than an anode package constituted by identical layers having the same characteristics and operating in subsequent phases. This is due to the fact that the duration D of an electrode of the dimensionally stable type is given by

$$\log D = C - B \log A$$

wherein C and B are constants and A is the electrode current density. Therefore, a reduction of A corresponds to an increase of D which can be more than proportional.

Furthermore, the anode of the present invention allows for avoiding the risk of short-circuits during operation of a high-speed galvanizing apparatus wherein the cathode strip slides at an extremely high speed and is thus subjected to vibrations, by providing for suitable means in contact with the surface facing the cathode and insulated from the anode and has such a structure as not to inhibit electrolyte circulation. A short-circuit preventing device is positioned on the surface of the anode facing the cathode, said device comprising a housing (14) made of an insulating material and rotating means (12) made of a material resistant to mechanical stresses.

In a preferred embodiment, the insulating means may be made by a metal insulated from the anode by plastic material.

The invention will be better illustrated by the following description of preferred embodiments thereof, which, however, are not to be intended as a limitation of the same. Referring to the drawings :

Fig. 1 is a perspective view of an anode of the invention, constituted by three expanded sheets, superimposed, having different geometrical characteristics:

Fig. 2 is a perspective view of another embodiment of the present invention wherein an array of rods having a circular section is laid over and across an array of rods having a rectangular section.

Fig. 3 is a schematic view of a galvanic cell utilizing the anodes of the present invention;

Fig. 4 is a plan view of the anode of the present invention comprising the device for preventing short-circuits;

Fig. 5 is an enlarged cross-section view of fig. 4

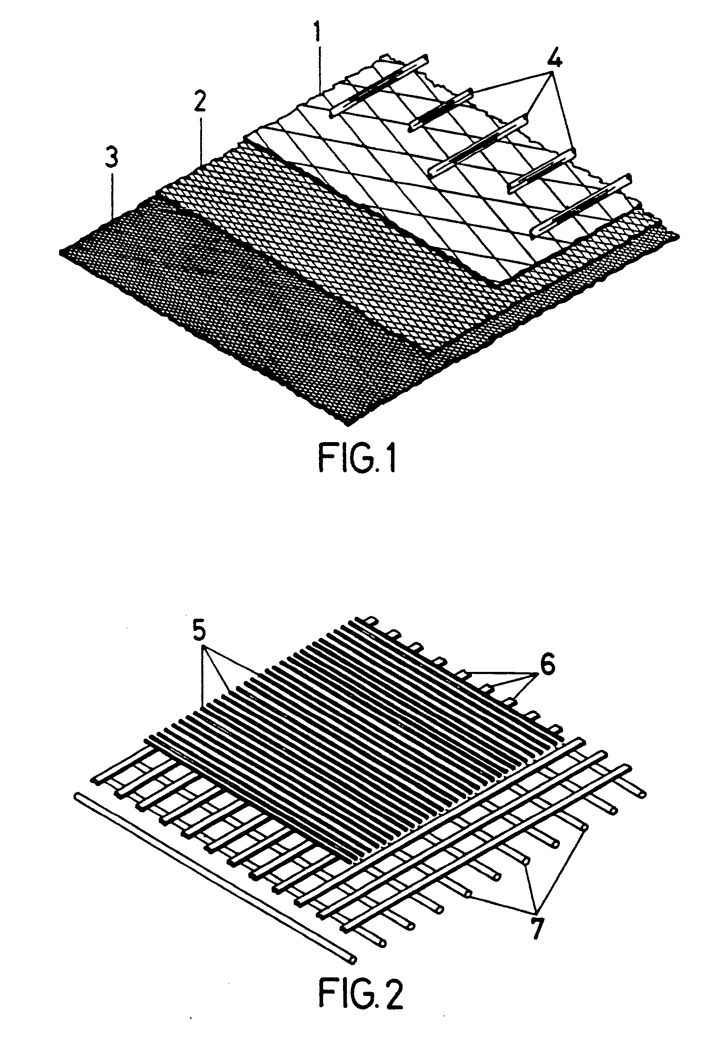

Fig. 1 shows a portion of an anode constituted by three electrodic layers, 1, 2, 3, constituted by three expanded sheets. For simplicity sake, the three layers are considered being made of the same material resistant to the electrolyte, such as for example titanium, tantalum, niobium or tungsten, and coated by the

EP 0 271 924 B1

same electrocatalytic material, such as for example oxides of platinum group metals. The expanded sheet 1 is the closest to the cathode, which is not shown in the figure. The three sheets are mechanically and electrically connected to each other, for example by spot-welding. As aforesaid, in order to obtain the same current density for all of the layers, the three sheets 1, 2, 3 have a different geometry and consequently different ohmic losses for each of the layers. The geometrical parameters which may be varied as regards the expanded sheet are, for example, the dimensions of the rhomboidal mesh, the thickness and the width of the mesh arms. Innumerable combinations of said geometrical parameters are possible in order to meet the requisites for a substantially identical current density of the electrodic layers. A suitable combination of said parameters is illustrated in Table 1

## TABLE 1

| Electrodic Layer | Mesh dimensions | Mesh arms | |
|---|---|---|---|
| | | thickness | width |
| | mm | mm | mm |
| 1 | 60 x 20 | 0,5 | 3 |
| 2 | 10 x 6 | 1,0 | 1 |
| 3 | 6 x 3,5 | 1,0 | 1 |

Expanded sheet 1, which is close to the cathode, has a larger mesh size with respect to the other sheets 2 and 3 whose dimensions decrease as their distance from the cathode increases.

The insulated layer 4, which permits to prevent the risk of short-circuits and is constituted by parallel rods made of a suitable insulating material resistant to the electrolyte, such as for example PTFE.

Fig. 2 shows a different embodiment of the present invention constituted by three electrodic layers 5, 6 and 7. The electrodic layers 5 and 7 are constituted by an array of rods having a circular section, arranged parallel to one other and suitably spaced apart, while the intermediate electrodic layer is constituted by an array of rods having a rectangular section, suitably spaced apart. The rods of each electrodic layer array are displaced of 90° with respect to the adjacent layer. For simplicity sake, all of the rods arrays are considered as being constituted of the same material and coated by the same electrocatalytic material.

In this case, the geometrical parameters which can be varied are the diameter of the rods having a circular section, the two dimensions of the rods having a rectangular sections and their gaps. A suitable combination for obtaining a substantially identical current density for each of the three layers is illustrated in Table 2

4

EP 0 271 924 B1

## TABLE 2

| Electrodic layer | rods dimensions mm | gap mm |
|---|---|---|
| 5 | 1,0 | 3,1 |
| 6 | 3,0 x 1,0 | 8,0 |
| 7 | 3,0 | 9,5 |

It is quite obvious that other embodiments may be obtained by suitably varying the geometries of the various layers.

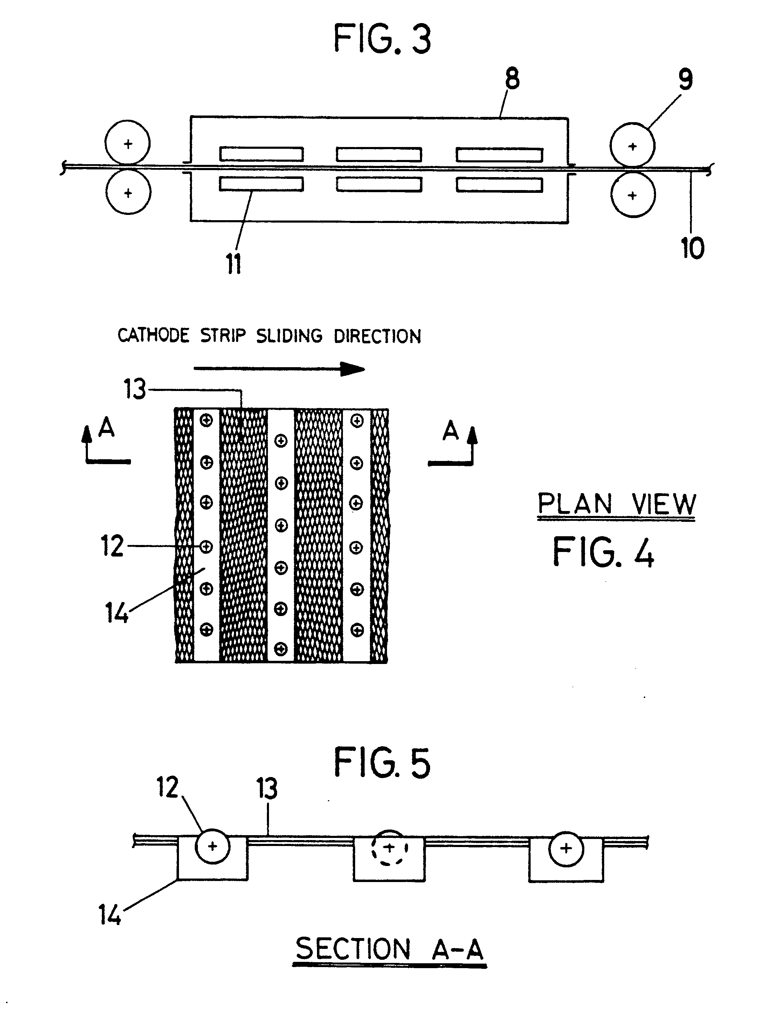

Fig. 3 is a schematic view of a cell for high speed electrogalvanizing wherein the cathode is constituted by an iron strip (10) sliding between a couple of copper current conducting rolls (9). The anodes which are placed in a cell housing 8 are indicated by 11.

Fig. 4 illustrates the short-circuits preventing device which is constituted by housing 14, having the shape of a parallelepiped made of an insulating material, which contains rotating means 12, in the form of balls or cylinders made of a mechanically resistant material, such as stainless steel. The anode surface is indicated by 13.

Fig. 5 is an enlarged cross-sectional view of the short-circuit preventing device shown in fig. 4.

In a further embodiment of the present invention, not illustrated by the figures, the electrodic layer which is more distant from the cathode is constituted by a solid sheet which acts as end wall for the galvanic cell and offers thus the advantage of a simple and light cell design.

In all of the aforementioned embodiments, for simplicity sake, all the electrodic layers have been considered as made of the same materials and coated by the same electrocatalytic materials and only the geometry of the electrodic layers have been modified. Obviously a substantially uniform current density may be attained also by suitably varying the type of materials and catalysts utilized. For example, the electrocatalytic coating utilized for the electrodic layer closest to the cathode may have a higher overvoltage for oxygen evolution and consequently a lower electrocatalytic activity than the coating applied to the most distant layer.

### EXAMPLE 1

Three couples of samples of titanium expanded sheet were provided in order to determine the active lifetime of the multi-layer anode of the present invention compared with conventional anodes. The geometrical characteristics of each of the three couples as illustrated in Table 1. The samples, 180 x 100 mm, were degreased by acetone and subsequently pickled in an aqueous solution of 10% oxalic acid at 85-95°C for 30 minutes. The samples were then activated by an electrocatalytic oxide coating obtained by thermal decomposition in oven from an aqueous solution having the following composition :
- iridium trichloride          60 g/l (as metal)
- tantalum pentachloride         50 g/l (as metal)
- hydrochloric acid          150 g/l

The coating was applied by a known technique, that is the paint, consisting of the aforementioned aqueous solution was applied, through immersion, followed by thermal treatment at 500°C for ten minutes. This procedure was repeated several times.

Three different samples were assembled by spot-welding obtaining thus a multi-layer electrode formed by three expanded sheets as illustrated in Fig. 1. The package was subsequently tested as anode in a

5

solution of 15% sulphuric acid at 50°C. The remaining three samples were separately tested under the same conditions. A current input of 216 A was fed to the four samples (i.e. the anodic package and the three single samples), corresponding to a total current density of 12 kA/m2. The most prolonged durability for the single sheet samples proved to be 2000 hours and the content of iridium per square meter was reduced to 10% compared with the initial value.

Conversely, the anodic package of the present invention was efficiently operating after 10,000 hours, with an iridium content per square meter of 70% compared with the initial value.

## EXAMPLE 2

Three couples of titanium expanded sheets samples, type 2 in Table 1, (mesh dimensions 10 x 6 mm) were degreased by acetone and then pickled in an aqueous solution of 10% oxalic acid for 30 minutes at 85°C-95°C. Each titanium couple was activated by suitable catalysts :

The couple of samples 1 and 2 was activated by galvanically depositing platinum from a commercial acid bath.

The couple of samples 3 and 4 was activated by Pt-Ir (70:30) obtained by thermal decomposition of suitable solution known in the art.

The couple of samples 5 and 6 was activated by mixed oxides as illustrated in Example 1.

The catalyst quantity was determined in order to obtain a lifetime in the range a some hundred hours for samples 2, 4 and 6 utilized as single anodes for the electrolysis of 15% sulphuric acid at a temperature of 50°C and at a current density of of 8 kA/m2. The following duration was observed :

- sample no. 2        190 hours
- sample no. 4        220 hours
- sample no. 6        350 hours

Samples nos. 1, 3 and 5 were assembled and welded together by spot-welding, obtaining thus a multi-layer anodic assembly comprising three anodic layers having the same geometry, constituted by a substrate made of the same material but provided with different electrocatalytic coating, the electrodic layer no. 1, close to the cathode, having a higher overvoltage for oxygen evolution.

The multi-layer structure thus obtained, having a projecting area of 180 x 100 mm, was tested as anode under the same conditions as single samples 2, 4, 6. After 1500 hours, the multi-layer structure of the invention was still efficiently working.

## EXAMPLE 3

A test under industrial conditions was carried out utilizing a galvanic cell, as schematized in Fig. 3, wherein the cathode was constituted by an iron strip (10) having a thickness of 0.5 mm and a width of 1250 mm, sliding between a couple of copper current conducting rolls (9). The anodes (11), 1250 x 1000 mm, were constituted by three activated screens, spot-welded to each other, having the same characteristics as the sample described in Example 1.

Each anode further comprised a device for preventing short circuits, as represented in Figs. 4 and 5, and comprising balls (12), having a diameter of 20 mm, made of stainless steel AISI 440°C, electrically insulated from the anode by housings (14) made of plastic material and having the shape of a parallelepiped, having the same length as the anode width, i.e. 1250 mm, and a width of 40 mm. The surface of housing (14) facing the cathode did not protrude from the anode (13) surface, while the balls protruded from the housing for about 5 mm and were free to rotate. Housings (14) were disposed transversally with respect to the direction of sliding of the cathode iron strip and positioned at a distance of 440 mm from each other. The balls (12) contained in housing (14) were spaced 200 mm from each other. The gap between the cathode strip and the anodes (11) surface was 10 mm.

Zinc deposition was carried out for 250 hours under the following conditions
- electrolyte composition :
  ZnSO4.7H2O        250 grams/liter
  H2SO4        20 grams/liter
- temperature        50 degrees C
- current density        15 kA/square meter
- sliding speed        2 meter/second.

For comparison purposes, a test was carried out under the same conditions and utilizing a similar galvanic cell equipped with Pb-Ag anodes, 30 mm thick.

It has been observed that the anodes of the invention allowed for obtaining a uniform deposit of zinc onto the cathode strip, giving rise to no risk of short-circuit and the cell voltage remained constant during the operation. Conversely, with the Pb-Ag anodes, a loss of planarity was detected due to frequent short-circuits caused by the contact between the cathode strip and the anodes, mainly on the edges of the strip as a consequence of the transversal vibrations, also scorings were observed especially on the edges.

Various modifications of the invention may be made without departing from the scope thereof and it should be understood that the invention is to be limited only as defined in the appended claims.

## Claims

1. A dimensionally stable anode for high speed galvanizing processes, comprising at least two electrodic layers substantially parallel and in electrical contact with each other, each layer being constituted by an electroconductive substrate resistant to the electrolyte, and coated by an electrocatalytic coating for oxygen evolution comprising metals and/or oxides of platinum group metals, characterized in that the geometry of the electrodic layer and/or the substrate material and/or the catalyst for the electrocatalytic coating of each layer are selected such that the current density of each single layer is substantially the same for all of the layers and does not exceed the value corresponding to the minimum desired lifetime of the anode, the number of the electrodic layers being such as to provide for a total current density in the range as required for high speed galvanizing, and a short-circuit preventing device positioned on the surface of the anode facing the cathode, said device comprising a housing (14) made of an insulating material and rotating means (12) made of a material resistant to mechanical stresses.

2. The anode of claim 1, characterized in that the electrodic layers have different geometries.

3. The anode of claim 1, characterized in that the electrodic layers comprise different electrocatalytic materials and the electrocatalytic material of the electrodic layer closest to the cathode has a lower electrocatalytic activity.

4. The anode of any of the preceding claims, characterized in that the substrates of the electrodic layers are made of different materials.

## Revendications

1. Anode stable du point de vue de ses dimensions pour procédés d'électrodéposition à vitesse élevée, comprenant au moins deux couches d'électrode sensiblement parallèles en contact électrique l'une avec l'autre, chaque couche étant constituée par un substrat électro-conducteur résistant à l'électrolyte et étant recouverte d'un revêtement électro-catalytique pour émission d'oxygène comprenant des métaux et/ou des oxydes de métaux du groupe platine, caractérisée en ce que la géométrie de la couche d'électrode et/ou du matériau de substrat et/ou du catalyseur pour le revêtement électro-catalytique de chaque couche est sélectionnée de telle sorte que la densité de courant de chaque couche prise individuellement est sensiblement la même pour toutes les couches et n'excède pas la valeur qui correspond à la durée de vie minimale souhaitée pour l'anode, le nombre de couches d'électrode étant tel qu'il assure une densité totale de courant qui s'inscrit dans la plage nécessaire pour une électrodéposition à vitesse élevée, et un dispositif d'empêchement de court-circuit étant positionné sur la surface de l'anode qui fait face à la cathode, ledit dispositif comprenant un boîtier (14) réalisé en un matériau isolant ainsi qu'un moyen de rotation (12) réalisé en un matériau résistant aux contraintes mécaniques.

2. Anode selon la revendication 1, caractérisée en ce que les couches d'électrode ont des géométries différentes.

3. Anode selon la revendication 1, caractérisée en ce que les couches d'électrode comprennent des matériaux électro-catalytiques différents et en ce que le matériau électro-catalytique de la couche d'électrode la plus proche de la cathode a une activité électo-catalytique inférieure.

4. Anode selon l'une quelconque des revendications précédentes, caractérisée en ce que les substrats des couches d'électrode sont faits de matériaux différents.

## Patentansprüche

7

1. Dimensionsstabile Anode zur Galvanisierung mit hoher Stromdichte, umfassend wenigstens zwei, im wesentlichen parallele und in elektrischem Kontakt miteinander befindliche Elektrodenschichten, wobei jede Schicht aus einem stromleitenden, elektrolytresistenten Substrat gebildet ist und zur Sauerstoffentwicklung mit einer elektrokatalytischen Beschichtung überzogen ist, die Metalle und/oder Oxide der Metalle der Platingruppe umfaßt

**dadurch gekennzeichnet, daß**

die Form der Elektrodenschicht und/oder des Substrats und/oder des Katalysators für die elektrokatalytische Beschichtung jeder Schicht so ausgewählt ist, daß die Stromdichte jeder einzelnen Schicht für alle Schichten im wesentlichen gleich ist und den der Mindestlebensdauer der Anode entsprechenden Wert nicht übersteigt, und die Anzahl der Elektrodenschichten so ausgewählt ist, daß die Gesamtstromdichte in dem zur Galvanisierung mit hoher Stromdichte erforderlichen Bereich zu liegen kommt, und eine einen Kurzschluß verhindernde Vorrichtung auf der Oberfläche der Anode gegenüber der Kathode angeordnet ist, wobei die Vorrichtung ein aus isolierendem Material bestehendes Gehäuse (14) und eine aus einem gegenüber mechanischen Spannungen resistenten Material bestehende Drehvorrichtung (12) umfaßt.

2. Anode nach Anspruch 1, dadurch gekennzeichnet, daß die Elektrodenschichten verschiedene Formen aufweisen.

3. Anode nach Anspruch 1, dadurch gekennzeichnet, daß die Elektrodenschichten verschiedene elektrokatalytische Materialien umfassen, und daß das der Kathode am nächsten liegende elektrokatalytische Material der Elektrodenschicht eine niedrigere elektrokatalytische Aktiviät besitzt.

4. Anode nach einem der vorhergehenden Ansprüche, dadurch gekennzeichnet, daß die Substrate der Elektrodenschichten aus unterschiedlichem Material hergestellt sind.

FIG.1

FIG.2

# FIG. 3

8

9

11

10

CATHODE STRIP SLIDING DIRECTION

13

A

A

12

14

PLAN VIEW
# FIG. 4

# FIG. 5

12   13

14

SECTION A-A